**Europäisches Patentamt**

**European Patent Office**

**Office européen des brevets**

(19)

(11) Publication number: **0 257 789**
**A1**

(12) # EUROPEAN PATENT APPLICATION

(21) Application number: **87306460.4**

(22) Date of filing: **21.07.87**

(51) Int. Cl.⁴: **G 03 B 27/58**, G 03 B 1/60, G 03 G 15/00

(30) Priority: **31.07.86 JP 180929/86**
**31.07.86 JP 180930/86**
**31.07.86 JP 180931/86**
**07.08.86 JP 184151/86**
**31.07.86 JP 117868/86 U**

(43) Date of publication of application: **02.03.88**
**Bulletin 88/9**

(84) Designated Contracting States: **DE FR GB**

(71) Applicant: **KONISHIROKU PHOTO INDUSTRY CO. LTD.,**
**No. 26-2, Nishishinjuku 1-chome Shinjuku-ku,**
**Tokyo 160 (JP)**

(72) Inventor: **Watanabe, Kazuo, Konishiroku Photo Ind. Co.,**
**Ltd 2970 Ishikawa-cho, Hachioji-shi Tokyo (JP)**
Inventor: **Hirata, Tetsuo, Konishiroku Photo Ind. Co.,**
**Ltd 2970 Ishikawa-cho, Hachioji-shi Tokyo (JP)**
Inventor: **Nishimura, Toshiharu, Konishiroku Photo Ind.**
**Co., Ltd 2970 Ishikawa-cho, Hachioji-shi Tokyo (JP)**
Inventor: **Kakutani, Masaki, Konishiroku Photo Ind. Co.,**
**Ltd 2970 Ishikawa-cho, Hachioji-shi Tokyo (JP)**

(74) Representative: **Wood, Anthony Charles et al,**
**Urquhart-Dykes & Lord 91 Wimpole Street, London**
**W1M 8AH (GB)**

(54) Image forming device having a detecting device for remaining quantity of photosensitive sheet.

(57) The invention provides an apparatus for forming an image on a photosensitive material which is stored as being a rolled web in a magazine (6) capable of being detachably mounted onto the apparatus, wherein the photosensitive material is fed out from the magazine (6) by a predetermined length, cut into a photosensitive sheet, transported to an image exposing part (3) and then conveyed into a developing process. There is provided a quantity detector (118) for detecting a remaining quantity of the photosensitive matrial in the magazine (6).

EP 0 257 789 A1

- 1 -

# IMAGE FORMING DEVICE HAVING A DETECTING DEVICE FOR REMAINING QUANTITY OF PHOTOSENSITIVE SHEET

## FIELD OF THE INVENTION

The present invention relates to an image forming device capable of recording images on a photosensitive sheet, and more particularly, to an image forming device wherein the remaining quantity of photosensitive sheet in a roll type may be detected.

As an image forming device, a copying apparatus employing an ordinary paper is generally available. This is of a type of processing wherein images on a document are scanned with a light source and transferred electrostatically onto a transfer drum, developed with toners and the images thus developed are transferred onto a recording paper. By the use of the principle of this processing, color documents may also be copied in colors and products therefor are already on the market. However, such products are not so satisfactory on the point of an image quality of copies produced therefrom.

From aforesaid viewpoint, there has been proposed a color copying apparatus wherein a color light-sensitive sheet is used as a recording sheet and the sheet is directly subjected to the scanning exposure of images on a document and then is developed and fixed similarly to a photographic process, thus an image excellent in its image quality is obtained.

On aforesaid copying apparatus employing the light-sensitive sheet, however, the light-sensitive sheet in a roll type loaded in a magazine is cut in each necessary length and taken out for being subjected to processing such as an exposure, developing and others, and it is impossible to know the remaining quantity of the light-sensitive sheet because it is impossible to open the magazine for checking the sheet. (Since the sheet is light-sensitive, it may be exposed to the external light to become defective, if the magazine is opened.)

An object of the invention is to devise so that the remaining quantity of the light-sensitive sheet in a roll type loaded in a magazine may be detected.

Futher object of the invention is to provide an image forming device capable of storing the remaining quantity of the light-sensitive sheet in a roll type loaded in a magazine mounted detachably on the image forming device. Namely, the light-sensitive sheet in a roll type loaded in an image forming device is considered to be replaced, for various reasons, with other light-sensitive sheet before being used up.

In this case, the remaining quantity of the light-sensitive sheet replaced on the half way should also be detected and known, otherwise, it is impossible to measure the remaining quantity when it is used again, which is a problem.

Further, the present invention relates to a recording paper container to be attached for use to the paper feeding section of an image forming device employing a recording paper in a roll type.

Generally, when a recording paper in a roll type loaded in such a recording paper container is a light-sensitive material, the recording paper container has its structure that prevents external light from entering the container. Therefore, it has been impossible to provide on such a recording paper container the see-through window through which the used quantity of the recording paper is observed.

The present invention has been devised from aforesaid background and its object is to provide a recording paper container which has its sufficient lighttightness for the light-sensitive recording paper in a roll type to be loaded therein and enables the used quantity of the recording paper to be observed from outside.

## SUMMARY OF THE INVENTION

The image forming device of the invention is provided thereon with a weight sensor that detects the weight of a magazine attached on the image forming device and the remaining quantity of the light-sensitive sheet loaded in aforesaid magazine is detected by the detected signal from the sensor.

Or, the image forming device of the invention has its structure wherein marks are provided on the surface opposite to the emulsion-coated side of the light-sensitive sheet and the remaining quantity of aforesaid light-sensitive sheet in a roll type is detected by observing the marks.

Or, the image forming device of the invention has its structure wherein the remaining quantity of the light-sensitive sheet in a roll type is detected by counting the number of turns of a paper feeding roller which feeds out the light-sensitive sheet in a roll type.

In order that the remaining quantity of a light-sensitive sheet may always be detected despite the replacement of the light-sensitive sheet, the image forming device of the invention is constituted so that the data of remaining quantity of aforesaid light-sensitive sheet may be stored in a non-volatile memory provided in the magazine.

Or, in order that the remaining quantity of a light-sensitive sheet may always be detected despite of the replacement of the light-sensitive sheet, the image forming device of the invention has its constitution wherein the magazine is provided with marks showing the type of light-sensitive sheet loaded in the magazine and aforesaid image forming device itself is provided with a reading means capable of discriminating aforesaid marks, thus, the data of remaining quantity of each light-sensitive sheet may be stored in a volatile memory provided on the image forming device.

An example of the invention has its constitution wherein an outer box that covers the internal box packing the recording paper in a roll type and has a paper feeding opening in a lip shape that feeds out the recording paper pulled out from the internal box, is provided therein with a body of rotation that rotates contacting aforesaid recording paper and the counter capable of indicating, with aforesaid body of rotation as a driving source, the quantity of consumption of the recording paper through the see-through window arranged at the optimum position on the external box.

## BRIEF DESCRIPTION OF THE DRAWINGS

Each of Figs. 1, 3, 8, 10 and 12 is a schematic diagram showing schematically a color copying apparatus which is an example of the invention,

Fig. 2 is a block diagram of a signal processing circuit in the example,

Fig. 4 is a partial view of a light-sensitive sheet used in the example in Fig. 3,

Fig. 5 is a block diagram of a circuit for indicating the remaining quantity of the light-sensitive sheet,

Fig. 6 is a partial view in other example of the light-sensitive sheet used in the example in Fig. 3,

Fig. 7 is a block diagram of the terminal indicating circuit thereof,

Fig. 9 is a block diagram of the signal processing circuit in the example in Fig. 8,

Fig. 11 is a block diagram of the signal processing circuit in the example in Fig. 10,

Fig. 13 is a block diagram of the signal processing circuit in the example in Fig. 12,

Fig. 14 is a side sectional view showing an example of the light-sensitive sheet container of the invention,

Fig. 15 is a plan sectional view of Fig. 14,

Fig. 16 is a partially-cut perspective view of Fig. 14, and Fig. 17 is a perspective view of a see-through window.

## DETAILED DESCRIPTION OF THE INVENTION

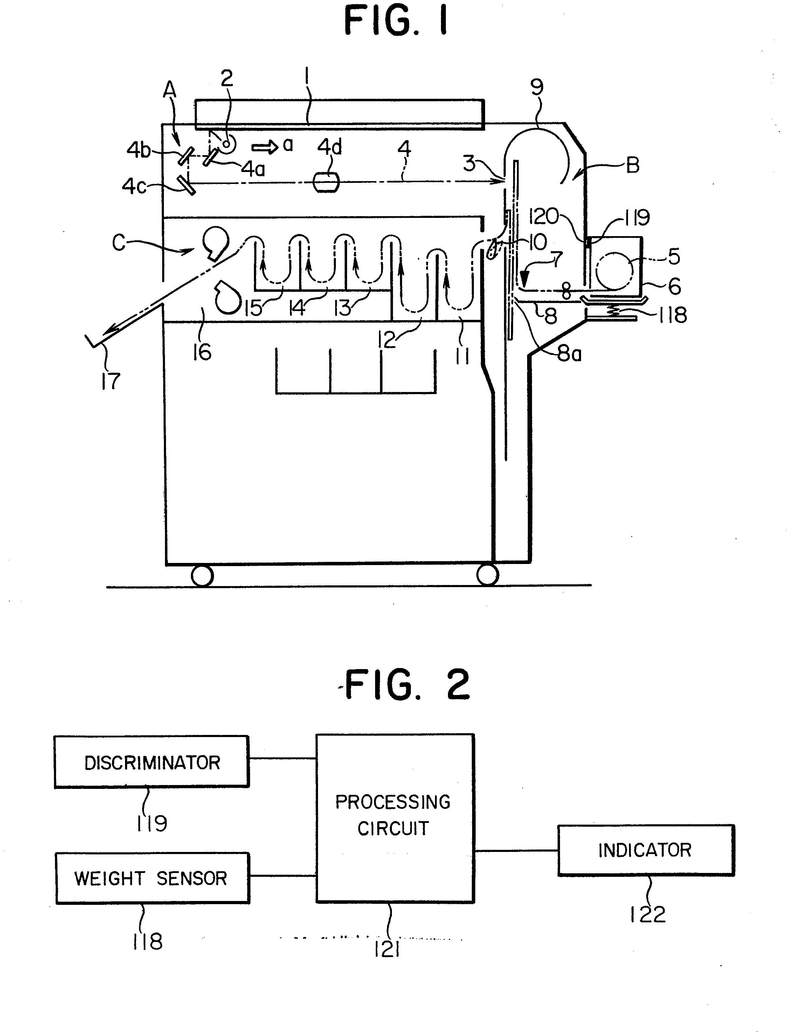

Examples of the invention are shown in Figs. 1, 3, 8 and 10. In these figures, the same menbers are given the same numbers. Fig. 1 is a diagram showing schematically the total outline of a color copying machine that shows an example of the invention. The color copying machine of the example is provided with a scanning exposure section A, a color light-sensitive sheet feeding section B and a processing section C.

Scanning exposure section A is constituted similarly to that of an ordinary plain paper copying apparatus. The numeral 1 represents a platen glass on which a document is placed and light source 2 that moves in the direction of an arrow 'a' for the scanning exposure is arranged under the platen glass, while optical system 4 for the exposure is provided so that an image of the document illuminated by the light source 2 may be led to window 3 for the exposure to the color light-sensitive sheet. The optical system for exposure 4 is composed of mirror 4a that is united with the light source 2 and of a unit that travels in the same direction as that of the mirror 4a at the speed which is one-half of the speed of the mirror 4a and comprises mirror 4b, 4c and a lens system 4d composed of a condenser lense, a color filter for color adjustment and an aperuture device.

In the sheet feeding section B, magazine 6 to which a color photosensitive sheet of a roll type [photographic paper and OHP (Overhead Projector) film etc.] is loaded is provided detachably and the sheet fed out from the magazine is cut by the cutter 7 to be a required length and then is guided by the guide member 8 to the upper shelter guide 9 through the exposure window 3 where an exposure is made.

On the half way of the guide member 8, hole 8a for causing a sheet to shelter and gate 10 for changing the advancing direction of a sheet are arranged.

In the processing section C, color developing tanks 11 and 12, bleach-fixing tank 13 and stabilizing tanks 14 and 15 are successively arranged and drying chamber 16 by means of a fan is provided next to the posterior stabilizing tank 15 and delivery tray 17 is provided at the end of the processing section.

In the aforesaid Fig. 1, the image light of a document exposed by the light source 2 advances to the exposure window 3 along the dashed line, while the photosensitive sheet cut by the cutter 7 advances along the path shown by the two-dot chain line and is exposed at the exposure window 3 and enter the processing section C through the gate 10 to be processed.

In the present example, weight sensor 118 is provided at the mounting portion for the magazine 6 on the apparatus and discriminating mark 119 such as a bar code showing the type of a photosensitive sheet 5 loaded in the magazine (e.g. types of photographic paper and OHP film) is arranged on the magazine 6 and type-sensor 120 for detecting the discriminating mark 119 is further provided on the main body of the apparatus.

Fig. 2 shows a circuit for processing the signals detected by both sensors 119 and 120. The type of the photosensitive sheet loaded in the magazine 6 may be detected by the type-sensor 119 because the weight per unit area differs depending on whether the photosensitive sheet is a photographic paper or OHP film, the type-signal changes the processing procedure for detected signals from the weight sensor 118 in accordance with the detected type.

For photographic paper and OHP film both having the same width, for example, A (kg/m) that is assumed to be the weight per unit length of the photographic paper, B (kg/m) that is assumed to be the weight per unit length of the OHP film and C (kg) that is a value of actual weight obtained by converting from the signals from the weight sensor 118 enable to calculate remaining amount X (m) through the following expression (1) for photographic paper and through the following expression (2) for OHP film.

$$X = C/A \dots\dots\dots\dots\dots (1)$$

$$X = C/B \dots\dots\dots\dots\dots (2)$$

Aforesaid processing is made by processing circuit 121 and as a result of that, the remaining amount is displayed by the indicator 122 and notified to an operator.

Owing to the foregoing, the precise remaining amount corresponding to each type of photosensitive sheet loaded in magazine 6 attached to the main body of the apparatus can be displayed by the indicator 122.

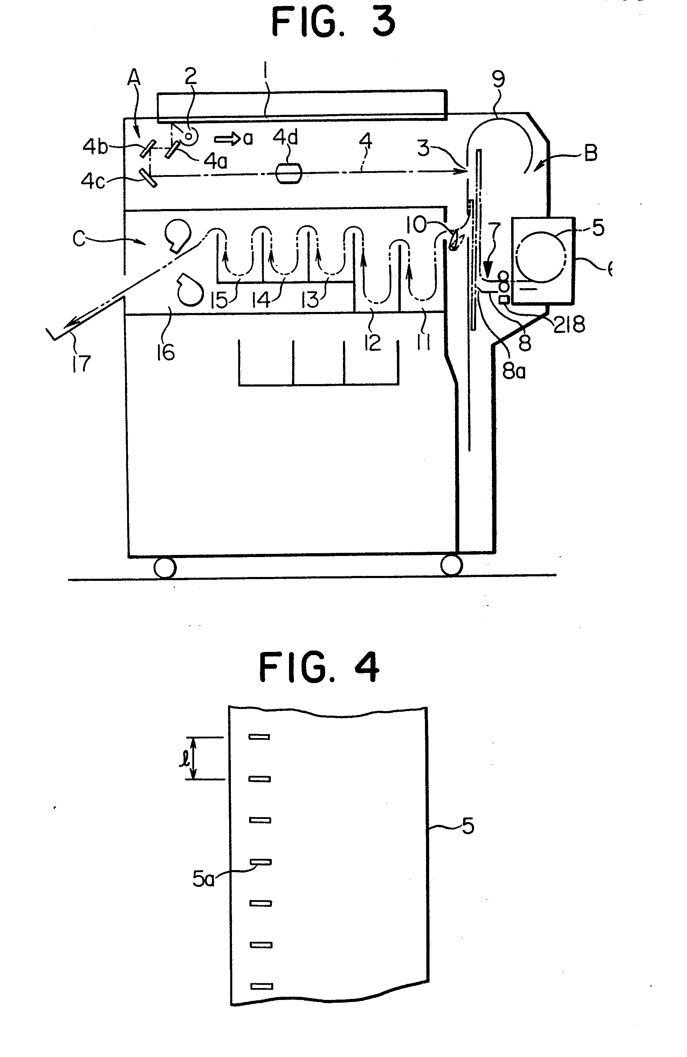

An example shown in Fig. 3 will be explained. In this example, the marks of light-reflector 5a are provided as shown in Fig. 4 in advance at a certain interval of at one side on the reverse side opposite to the emulsion side of the color photosensitive sheet 5 loaded in the magazine 6, so that they may be detected by the sensor 218 (e.g. photocoupler of a light-reflection type) provided at an outlet of the magazine 6.

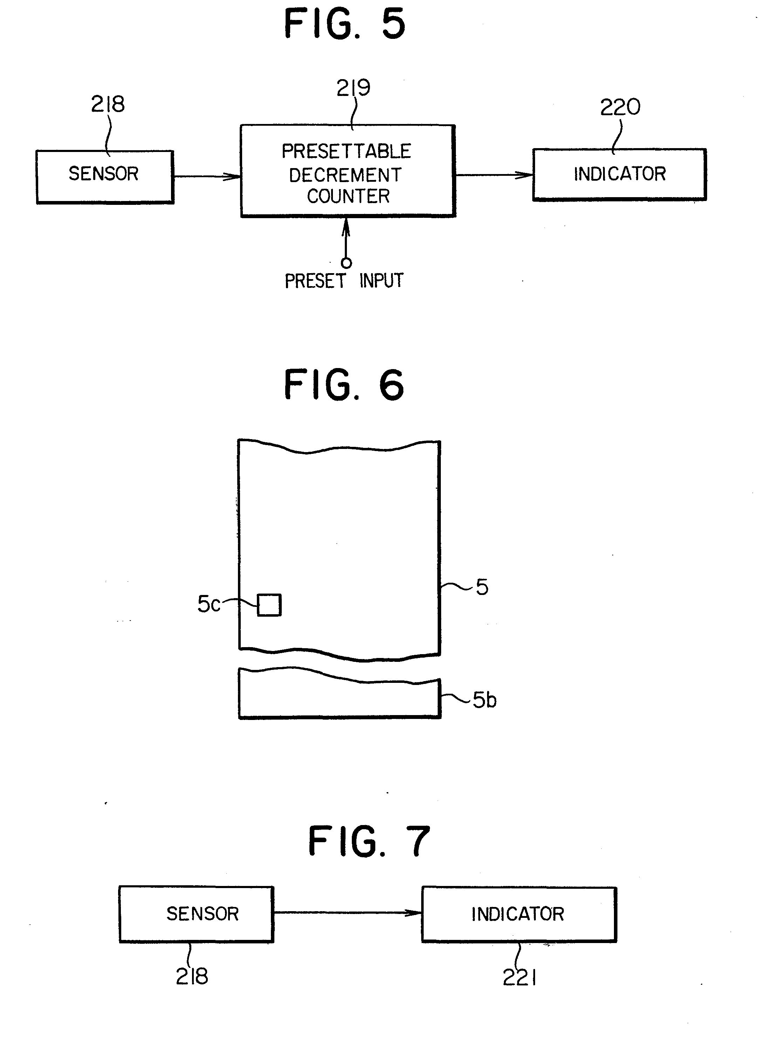

Fig. 5 shows a circuit for processing signals from the sensor 218 and detection pulses from the sensor 218 are inputted into the presettable decrement counter 219 and the value of preset input corresponding to the length of color photosensitive sheet to be loaded in the magazine 6 is counted down and the value then counted which is converted into the length is indicated by the indicator 220.

Therefore, when aforesaid interval is set in advance to 10 cm, for example, the length of color photosensitive sheet 5 is reduced by 10 cm each time the counted value for output from the counter 219 is reduced by '1'. For example, when '200' is preset from the preset input, the value of 20 m and less may be indicated on indicator 220.

Fig. 6 shows another example. In this example, the mark 5c by means of dye is arranged on one side in the vicinity of the trailing edge 5b of photosensitive sheet 5.

Fig. 7 shows an indicator circuit wherein the mark 5c is detected by the sensor 218 and indicated on indicator 221, and a lamp or the like may be used as the indicator 221. When the position of the mark 5c is determined in advance, an operator can perceive that the remaining amount is almost zero, namely, the trailing edge is approaching, when the mark 5c is detected and the indicator is lit.

Incidentally, when the timing of the detection of the vicinity of trailing edge of the sheet 5 is in the period wherein the sheet 5 is fed to be cut by the cutter 7 for the next exposure, it is desirable that the feeding is continued until the cutting is finished so that the next exposure operation may not be discontinued. For this reason, therefore, it is preferable that the position of the mark 5 is determined at the place which is far from the trailing edge 5b by the length equivalent to at least one frame of a copy. Such arrangement prevents an erroneous copying. Further, when aforesaid color photosensitive sheet 5 is an OHP paper, it is desirable that the dye forming aforesaid mark 5c is one that changes to be transparent while being processed or the one that is dissolved and does not remain on the paper.

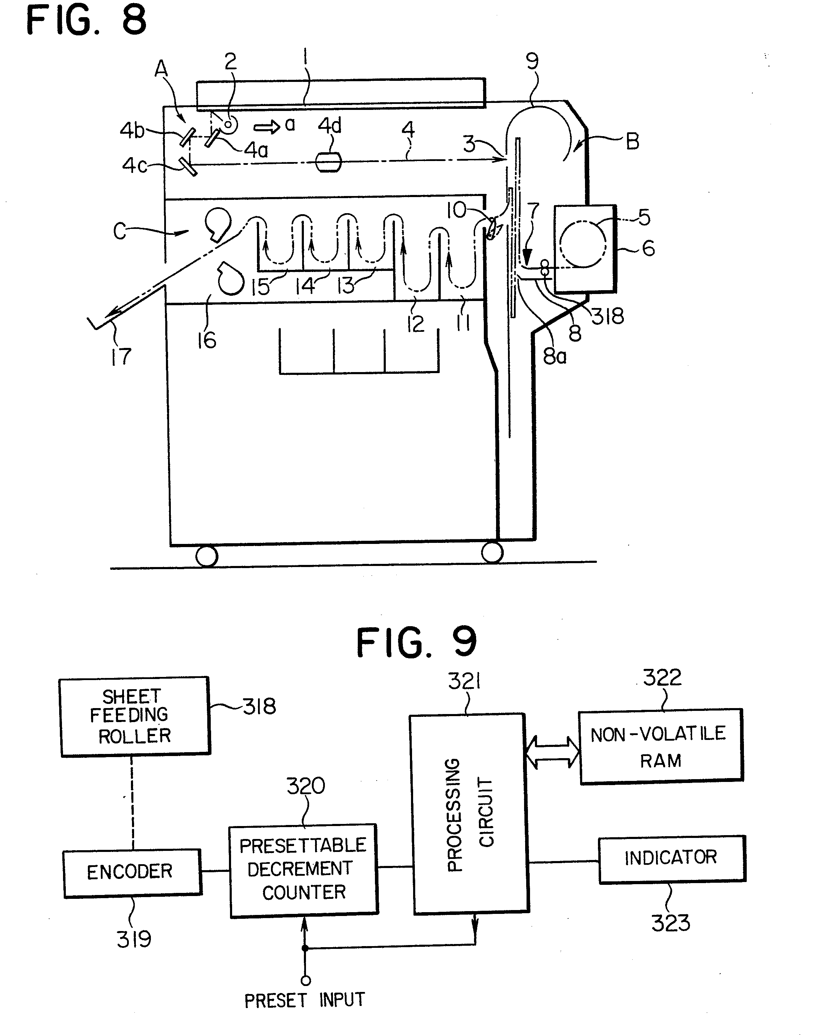

An example shown in Fig. 8 will be explained next. In this example, the number of rotations of paper feeding roller 318 that feeds out the color photosensitive sheet 5 loaded in the magazine 6 is detected by encoder 319 as shown in Fig. 9 and the output pulse from the encoder 319 counts down the presettable decrement counter 320 wherein the preset value is set in advance.

Since the encoder 319 generates pulses whose number is proportional precisely to the amount of feeding of photosensitive sheet 5 that is fed by the paper feeding roller 318, the feeding length of photosensitive sheet 5 may be counted down. Therefore, when the preset value that corresponds to the length of the photosensitive sheet 5 loaded in the magazine is set to the presettable decrement counter 320, the output count value of this counter 320 may represent the data showing the remaining amount of the photosensitive sheet 5.

The numeral 321 is a processing circuit, 322 is a memory means such as a non-volatile RAM, for example, and 323 is an indicator that indicates the remaining amount of photosensitive sheet 5. The output count value from the counter 320 is inputted into the processing circuit 321, then outputted on the indicator 323 and the remaining amount of sheet 5 is indicated, in which period, the count values are updated successively and stored in the same address in the non-volatile RAM 322.

Therefore, when the power is turned off for the suspension of operation of the apparatus, the data of remaining amount of photosensitive sheet 5 immediately before such suspension are stored in the non-volatile RAM 322 and when the power is turned on for the next operation, the data in the non-volatile RAM are read and outputted as a preset value from the processing circuit 321 to the counter 320.

Therefore, the counter 320 is preset to the count value existing immediately before the power is turned off and then counted down by the pulses from the encoder 319.

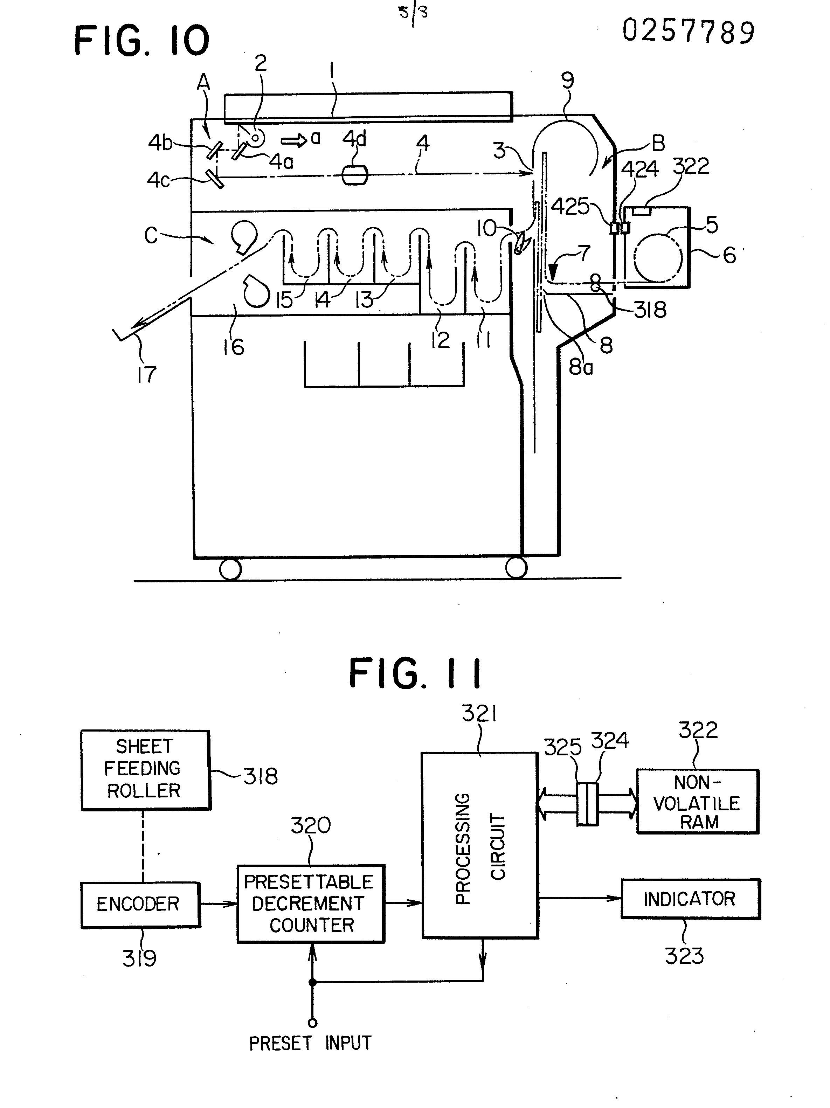

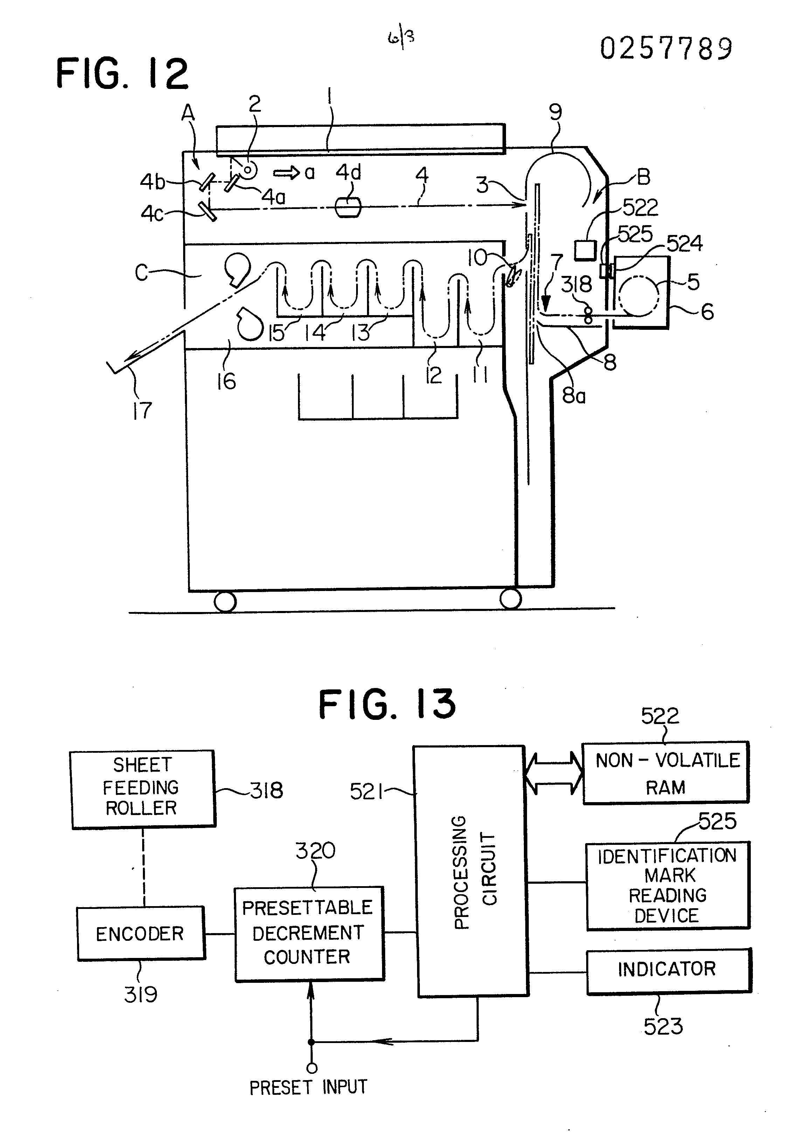

Next, an example shown in Fig. 10 will be explained. This example is different from the example shown in Fig. 8 on the point that the non-volatile RAM 322 is provided in the magazine 6 and connected to the main body of an apparatus via connectors 324 and 325. As shown in Fig. 11, the output count values of the counter 320 are inputted into the processing circuit 321 and then outputted to the indicator 323 where the remaining amount of the sheet 5 is indicated and the count values in that period are updated successively and stored in the same address in the non-volatile RAM 322.

Therefore, when the magazine 6 is taken out, the data of the remaining amount of the photosensitive sheet existing immediately before the magazine 6 is taken out are stored in the non-volatile RAM 322. An occasion for taking out the magazine 6 includes the one for changing the photosensitive sheet 5 from a photographic paper to an OHP film or from an OHP film to a photographic paper.

When setting the magazine on the main body of an apparatus, the data in the non-volatile RAM are read and outputted as a preset value from the processing circuit 321 to the counter 320.

Therefore, the counter 320 is preset to the remaining value of the photosensitive sheet 5 in the magazine 6 and then counted down by the pulses from the encoder 319.

As described above, it is impossible to open the magazine 6 and thereby to confirm visually the remaining amount, but it is possible to store the data for the remaining amount by causing the non-volatile RAM to be built in the magazine 6 as described above.

An example shown in Fig. 12 will be explained. In this example, 521 is a control circuit, 522 is a non-volatile RAM and 523 is an indicator that indicates the remaining amount of the photosensitive sheet, all of which are provided on the main body of an apparatus. Namely, the non-volatile RAM 322 is provided in the magazine 6 in the example of Fig. 10 but it is provided on the main body in this example. Further, the discriminating mark 524 such as a bar code or the like, for example, is provided in the magazine 6 for discriminating the photosensitive sheet loaded therein, while the reading device for reading aforesaid mark 524 is provided on the main
body.

. The output count values of the counter 320 are inputted
into the control circuit 521 where they are processed and
then outputted to the indicator 523 for the indication of the
remaining amount of the sheet 5 and count values in that
period are updated successively and stored in the same
address in the non-volatile RAM 522.

The address for writing and reading for the non-volatile
RAM 522 is an address corresponding to the mark read by
aforesaid reading device 525, thereby, the remaining amount
for each photosensitive sheet in respective magazine is
stored in different address for each magazine.

Therefore, when the magazine 6 is taken out, the data of
the remaining amount of photosensitive sheet existing
immediately before the magazine is taken out are stored in
the address discriminated by the mark 524 of the magazine 6
on the non-volatile RAM 522.

When the same or other magazine 6 is attached on the
main body of an apparatus next, the mark 24 of the magazine 6
attached newly is read by the reading device 25 and the
results of such reading determine the reading address of the
non-volatile RAM 522. Therefore, the data of the remaining
amount of the photosensitive sheet in the magazine 6 are read
and outputted as a preset value from the control circuit 521 to the counter 320.

Accordingly, the counter 320 is preset to the remaining value of the photosensitive sheet in the magazine newly attached and then counted down by the pulses from the encoder 19.

Owing to the aforesaid manner wherein the data of the remaining amount of the photosensitive sheet in each magazine are stored in each address in the non-volatile RAM discriminated by the mark of each magazine, the correct remaining amount is always indicated even if the magazine is changed.

Incidentally, in the examples shown in Fig. 10 and Fig. 12, the data of remaining amount of photosensitive sheet corresponding to the count values of the counter 320 are updated successively and stored in non-volatile RAMs 422 and 522, but it is also possible to arrange so that the remaining amount corresponding to the count value of the counter 320 existing when the power is turned off after the operation can automatically be stored.

As shown above, the present invention enables to perceive the data of remaining amount of the sheet in the replaced magazine even in the case of changing magazines, thus, the remaining amount of the photosensitive sheet newly loaded may precisely be perceived.

As data to be stored in the non-volatile RAM, output pulses from the encoder are used in aforesaid examples, but the invention is not limited to this and the output from the sensor that detects the marks provided on the photosensitive sheet at a certain interval as shown in Fig. 4 may also be used. The one that may detect the remaining amount of the photosensitive sheet in use as described above may be used as output signals to the non-volatile RAM. Further, the non-volatile RAM is used as a storing means, but the invention is not limited to this and the one capable of storing the desired data such as magnetic materials, for example, may be used as a storing means.

In order to provide a recording paper container capable of keeping the lighttightness even for the recording paper in a roll type and indicating the used amount of the recording paper, a rotating body that rotates contacting aforesaid recording paper and a counter capable of indicating, by being actuated by aforesaid rotating body as a driving source, the used amount of the recording paper on a see-through window provided at an optimum place on the outer box, are provided in the outer box that covers the inner box which packages the recording paper in a roll type and has thereon a paper-feeding outlet in a lip shape through which the recording paper taken out from the inner box is fed to the outside, in the example which will be explained as follows.

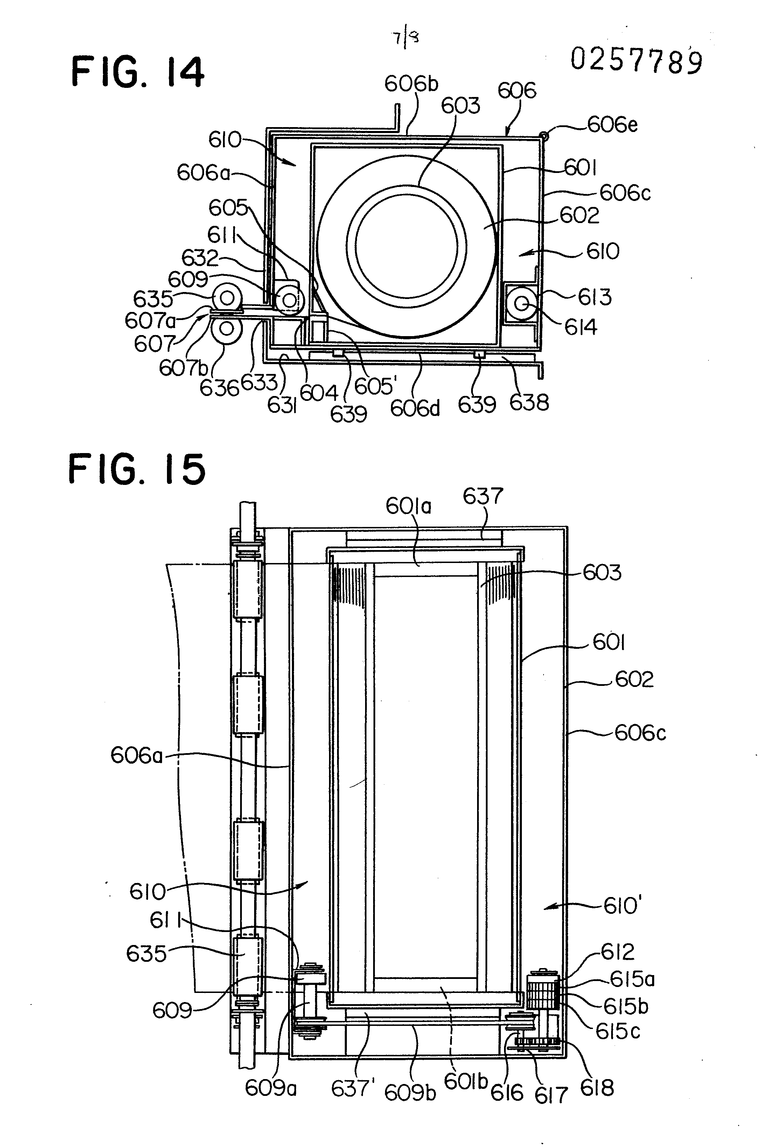

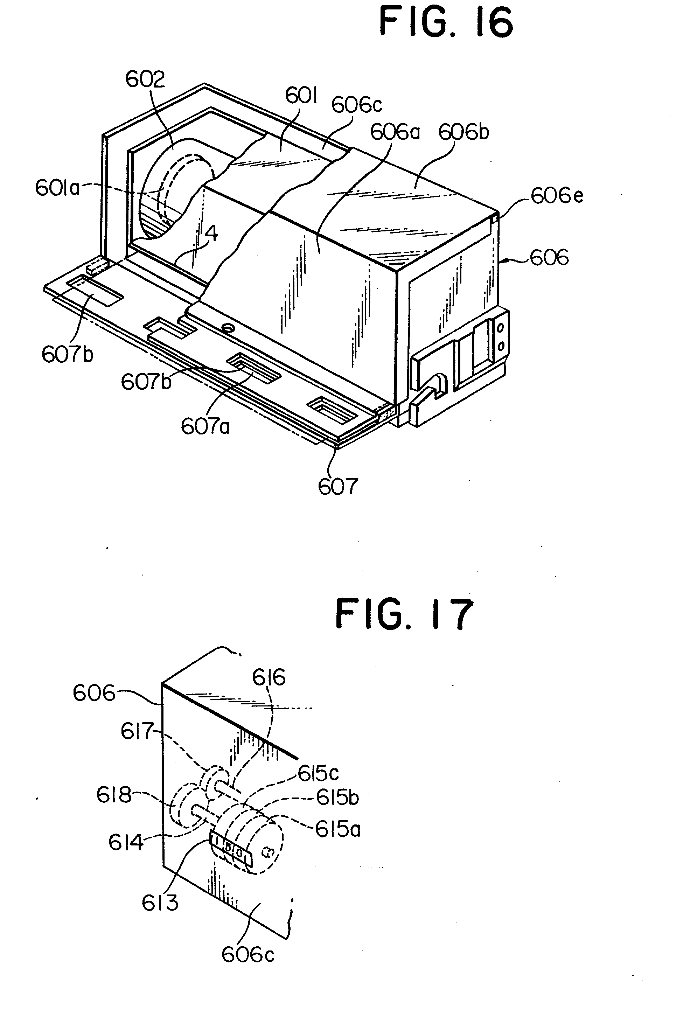

In Figs. 14 - 16, 601 is an inner box containing the recording paper 602 in a roll type and the inner box 602 supports with its rotating members 601a and 601b provided on the faces of the inner box at roll end sides the core 603 of the recording paper 602 rotatably and has an outlet 604 at the corner portion on one of 4 sides corresponding to the roll surface through which outlet the recording paper 602 is drawn out. The outlet 604 is shielded with a shielding cloth (not illustrated) glued on the surfaces opposing to guide members 605 and 605' provided in the inner box 601 so that they oppose each other. The numeral 606 is an outer box that covers aforesaid inner box 601 and a hinge 606e is provided at the upper corner of the rear plate 606c so that the front plate 606a and the top plate 606b may be opened as a lid. At the bottom of the top plate 606a and at the edge of the bottom plate 606d facing the top plate, a paper-feeding outlet in a lip shape (hereinafter referred to as a lip section) 607 is formed. When the container of the invention is attached on the mounting section 631 formed on the paper feeding section of the main body of image forming device, the purpose of the lip section 607 is to insert from the opening 633 provided on the inner wall 632 of the mounting section 631 into the image forming device. Owing to the insertion of the lip section 607, the through holes 608a and 608b provided on the upper and lower blades 607a and 607b are engaged with upper and lower paper feeding rollers 635 and 636 arranged in the vicinity of aforesaid opening 633 and the recording paper 602·is drawn out by the rotation of aforesaid rollers. The recording paper 602 drawn out by the paper feeding rollers 635 and 636, after being drawn out to a certain length, is cut by the cutter which is not illustrated and then conveyed as a cut paper into the image forming device, where the necessary steps of processing are given successively. The size of the cut paper is determined by an unillustrated control device.

Incidentally, 637 and 637' are spacers which suppress the lateral movement of the inner box 601, 638 is a guide rail and 639 are the rollers provided on the bottom surface of the outer box 606 so that they touch internally the guide rail 638.

The numeral 609 is a rotating body that rotates contacting the one side edge (the area other than the recording area) of the recording paper 602 drawn out by aforesaid paper feeding rollers 635 and 636, and the rotating body 609 is supported axially on the bearing frame 611 provided in the space section 610 between the outlet 604 provided on the inner box 601 and the lip section 607 on the outer box 606.

The numeral 612 is a counter capable of indicating, with aforesaid rotating body as a driving source, the used amount of the recording paper 602 on the see-through window 613 provided on the rear plate 606c of the outer box 601. In the counter 612, three disks 615a - 615c representing the first digit, the second digit and the third digit respectively are arranged adjacently on the shaft 614 provided in the space section 610' between the rear plates of the inner box 601 and the outer box 606, and when the disk 615a for the first digit makes ten counts (one rotation), the disk 615b makes one count and when the disk 615b makes one turn, the disk 615c for the third digit advances by one count. The shaft 614 of the counter 612 is connected, through gears 617 and 618, to the pulley shaft 616 which is coupled with the shaft 609a of aforesaid rotating body 609 through the belt 609b and the shaft 614 makes the number of turns which is one tenth of plural number of turns made by aforesaid rotating body 609. Namely, the disk 615a for the first digit can advance for each one count. For example, when the length of the circumference of a circle of aforesaid rotating body 609 is 70 mm, three turns thereof is equivalent to 210 mm and this length corresponds to the paper in A4 size. Therefore, if three turns of the rotating body cause the shaft 614 to make 1/10 turns, the disk 615a for the first digit advances by one count for a sheet of A4 size paper. Therefore, when the total length of the roll of aforesaid recording paper 602 is equivalent to 150 sheets of A4 size paper, all the recording paper is used up when the counting arrives at 150 counts. When the paper is used after being cut in A3 size, 6 turns of the rotating body 609 correspond naturally to one sheet and the indication on the counter 612 advances by 2 counts.

Incidentally, in the aforesaid example, the rotating body 609 is provided in the space section 610 between the outlet 604 provided on the inner box 601 and the lip section 607 on the outer box 606 and is caused to contact the recording paper passing through the space section, but it is also possible to make a hole at an optimum position on the inner box 601 and to cause the rotating body to contact the roll section of the recording paper through the hole. In this case, when the recording paper is a photosensitive material, it is necessary to devise so that the light-tightness is not lost. Further, three disks are provided as the counter 612 whose driving source is aforesaid rotating body in aforesaid example, the digital system is also available.

As described above, the present invention is characterized in that the rotating body that rotates contacting aforesaid recording paper and the counter capable of indicating, with aforesaid rotating body as a driving source, the used amount of the recording paper on the see-through window provided at an optimum place on the outer box are provided in the outer box that covers the inner box containing the recording paper in a roll type and has a paper feeding outlet in a lip shape through which the recording paper drawn out from the inner box is fed to the outside. Therefore, the invention has an advantage that the light-tightness is fully maintained even when the recording paper in a roll type is a photosensitive material and the used amount of the recording paper can be seen through from the outside.

- 23 -                                    0257789

What is claimed is:

1. In an apparatus for forming an image on a photosensitive material which is stored as being a rolled web in a magazine capable of being detachably mounted onto said appratus, wherein the photosensitive material is fed out from the magazine by a predetermined length, cut into a photosensitive sheet, transported to an image exposing part and conveyed into a developing process; characterized in that
said apparatus comprises a quantity detection means for detecting a remaining quantity of the photosensitive material.

2. The apparatus of claim 1,
wherein said quantity detection means comprises a weight sensor for weighing the magazine mounted on said apparatus.

3. The apparatus of claim 2,
wherein said apparatus further comprises a discriminator for discriminating a type of photosensitive material, and
wherein said quantity means calculates a remaining quantity in accordance with the discriminated type of phtosensitive material.

4. The apparatus of claim 1,
wherein there is provided a mark on a reverse side of the rolled web which is applied photosensitive emulsion on one side thereof, and
wherein said quantity detection means comprises a reading means for the mark.

5. The apparatus of claim 1,
wherein there is provided a roller means for feeding a rolled web by a predetermined length, and
wherein said quantity detection means comprises a rotation detector for detecting a rotation of said roller means.

6. The apparatus of claim 1,

wherein said quantity detection means comprises a memory means for storing a remaining quantity of the phtosensitive material.

7. The apparatus of claim 6,

wherein there is provided a discriminator for discriminating the magazine mounted on said apparatus, and

wherein said quantity detection means store the remaining quanity into an address of said memory means in accordance with the discriminated magazine.

8. The apparatus of claim 7,

wherein said memory means is a non-volatile RAM.

9. The apparatus of claim 1,

wherein, on the magazine, there is provided a memory means for storing the remaining quantity of photosensitive material therein, and

wherein said quantity detection means output the remaining quantity to said memory means.

10. The apparatus of claim 9,

wherein said memory means is a non-volatile RAM.

11. The apparatus of claim 1,

wherein there is provided a light-tightness container for containing the magazine therein,

wherein said quantity detection means is provided in said light-tightness container, and

said quantity detection means cmprises

a rotation detection member rotating in contact with the rolled web for detecting the remaining quantity of the photosensitive material and

a quantity indication member diposed so as to display the remaining quantity which can be observed from the outside of said apparatus.

87306460.4

0257789

# FIG. 1

# FIG. 2

| DISCRIMINATOR | PROCESSING CIRCUIT | INDICATOR |

119

118 WEIGHT SENSOR

121

122

## FIG. 3

## FIG. 4

0257789

# FIG. 5

218
SENSOR

219
PRESETTABLE DECREMENT COUNTER

220
INDICATOR

PRESET INPUT

# FIG. 6

5

5c

5b

# FIG. 7

218
SENSOR

221
INDICATOR

# FIG. 8

# FIG. 9

SHEET FEEDING ROLLER — 318

ENCODER 319

PRESETTABLE DECREMENT COUNTER 320

PROCESSING CIRCUIT 321

NON-VOLATILE RAM 322

INDICATOR 323

PRESET INPUT

# FIG. 10

# FIG. 11

SHEET FEEDING ROLLER 318

ENCODER 319

PRESETTABLE DECREMENT COUNTER 320

PROCESSING CIRCUIT 321

NON-VOLATILE RAM 322

INDICATOR 323

PRESET INPUT

FIG. 12

6/3

0257789

FIG. 13

SHEET FEEDING ROLLER — 318

PROCESSING CIRCUIT — 521

NON - VOLATILE RAM — 522

IDENTIFICATION MARK READING DEVICE — 525

INDICATOR — 523

ENCODER — 319

PRESETTABLE DECREMENT COUNTER — 320

PRESET INPUT

# FIG. 14

# FIG. 15

# FIG. 16

# FIG. 17

| | European Patent Office | EUROPEAN SEARCH REPORT | Application Number |
|---|---|---|---|

EP 87 30 6460

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 802 085  (SCHOONMAKER)<br>* Abstract; figures 1,2 *<br>--- | 1 | G 03 B  27/58<br>G 03 B   1/60<br>G 03 G  15/00 |
| Y | US-A-3 614 220  (KOMORI et al.)<br>* Column 2, line 52 - column 3, line 4;<br>abstract; figure 1 *<br>--- | 1 | |
| A | US-A-4 426 883  (INOUE et al.)<br>* Abstract; figure 1 *<br>--- | 1,5,11 | |
| A | US-A-3 898 681  (HERTEL et al.)<br>* Column 2, lines 3-21; column 5, lines<br>30-45; figures 1,2 *<br>--- | 1,11 | |
| A | FR-A-2 571 508  (SOCIETE AATON)<br>* Page 2, lines 12-33; page 4, lines<br>1-34; figure 1 *<br>--- | 1,6-10 | |
| A | US-A-3 709 604  (NIESEN et al.)<br>* Figures 1,2 *<br>----- | 1 | |
| | | | TECHNICAL FIELDS SEARCHED (Int. Cl.4)<br><br>G 03 B  27/00<br>G 03 B   1/00<br>G 03 G  15/00 |

The present search report has been drawn up for all claims

| Place of search | Date of completion of the search | Examiner |
|---|---|---|
| THE HAGUE | 09-11-1987 | CIGOJ P.M. |